# EUROPEAN PATENT APPLICATION

(11) **EP 2 840 800 A1**
(43) Date of publication of application: **25.02.2015**
(21) Application number: 14181271.9
(22) Date of filing: 18.08.2014
(51) Int. Cl.: H04N 21/439

(54) **Content-based audio/video adjustment**

(30) Priority: 21.08.2013 US 201313972808
(71) Applicant: Harman International Industries, Inc., Stamford, CT 06901 (US)
(72) Inventor: Lakkundi, Ravi, 560061 Bangalore (IN); Hampiholi, Vallabha, 560035 Bangalore (IN)
(74) Representative: Bertsch, Florian Oliver

(57) **Abstract**

Embodiments are disclosed for methods and systems for adjusting audio/video data. In some embodiments, a method for performing adjustments includes receiving audio content and video content and analyzing the video content to identify image data indicating a channel generating the audio and video content. The method further includes adjusting the audio data of the audio content responsive to a type of content on the channel.

## Description

### FIELD

The disclosure relates to adjusting sound processing based on a type of audio or video content.

### BACKGROUND

Home entertainment systems may include multiple devices, such as a television, one or more audio/video source devices, a speaker system, and a media processing system, which may include an audio/video receiver (AVR), a set-top box, or other suitable device for receiving and processing media content from an audio/video source and outputting the processed content to a media output device. For example, the media processing system may provide content from the one or more audio/video sources to the television and the speaker system. The media processing system may also adjust audio output according to different modes to accentuate different features of the audio. For example, an AVR, which may include a Blu-ray Disc System (BDS) or other home theatre head unit, may receive audio/video content from an audio/video source device and output audio/video content (e.g., content processed in accordance with a particular mode) to audio/video output devices. The modes may each process the audio differently to produce sound qualities that are most suited for different types of content, such as sporting events, movies, music, video games, etc. In one example, a user directs the media processing provided by the system by selecting a particular audio and/or video output mode defining audio and/or video adjustments based on the type of content being viewed. However, the type of content associated with programming provided by an audio/video source, such as a broadcast television provider or set-top box, may change frequently as the user changes channels. For example, the programming provided by the audio/video source may include television serial programs, televised movies, advertisements, and/or other programming associated with different types of content.

### SUMMARY

One or more embodiments are disclosed for methods and systems for adjusting audio/video content from an audio/video source based on the type of audio/video content received from the audio/video source. In some embodiments, a method for performing the adjustments includes receiving audio and video content and analyzing the video content to identify image data indicating a channel generating the audio content and the video content, such as a channel logo. Accordingly, the image data may indicate the television channel that is being broadcast and providing the audio/video content. The method further includes adjusting the audio data responsive to a type of content being provided on the channel. The method may further include sending the image data to a remote service and receiving information regarding a type of content on a channel defined by the image data.

In other embodiments, a method for adjusting audio data responsive to the type of content may include detecting a change in audio/video content received at an audio/video receiver and analyzing video content of the audio/video content for logo image data defining a channel logo. In such embodiments, the method may further include, responsive to detecting the logo image data, receiving an indication of the type of content for the audio/video content. Responsive to the indication of the type of content, the method may include adjusting an audio output mode and outputting the audio/video content in accordance with the audio output mode.

A media processing system (e.g., an audio/video receiver, set-top box, BDS, or other system capable of media processing) for performing the adjustment of audio data described in the present disclosure may include an audio/video interface communicatively connected to an audio/video source for receiving audio and video content, a panel interface communicatively connected to a display panel for outputting video content to the display panel (e.g., a television), and an audio output device interface communicatively connected to an audio output device (e.g., one or more speakers) for outputting audio to the audio output device. The audio/video receiver may also include a microprocessor configured to execute instructions stored on a storage device to analyze the video content to determine logo image data, determine a type of video content based on the logo image data, and adjust audio output responsive to the type of video content. In some embodiments, the audio/video receiver, set-top box, BDS, and/or other media processing system may include an audio amplifier. In other embodiments, one or more of the systems described above may not include an audio amplifier.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

The disclosure may be better understood from reading the following description of non-limiting embodiments, with reference to the attached drawings, where:
FIG. 1 shows an example home entertainment system in accordance with one or more embodiments of the present disclosure;
FIG. 2 shows an example surround sound configuration for a home entertainment system in accordance with one or more embodiments of the present disclosure;
FIG. 3 shows a block diagram of an audio/video receiver (or other media processing system) in accordance with one or more embodiments of the present disclosure;
FIGS. 4A and 4B show flow charts for a method of adjusting an audio output mode based on a type of content presented in accordance with one or more embodiments of the present disclosure;
FIG. 5 is a flow chart for a method of identifying a type of content presented in accordance with one or more embodiments of the present disclosure.
FIG. 6 is a flow chart for a method of determining a channel based on logo image data in accordance with one or more embodiments of the present disclosure.

### DETAILED DESCRIPTION

A home entertainment system may include a plurality of audio/video devices (as described above) for receiving, transmitting, and/or presenting audio/video content to a user. The user may select audio and/or video profiles for the audio/video content manually for each type of content presented by the home entertainment system. However, frequent changes between types of content may render manual resetting of the audio/video mode cumbersome and time-consuming. One or more embodiments are disclosed for automatically determining the type of audio/video content being presented to a user based on features of the audio/video data, and adjusting the audio/video data adjusted to suit the type of content via an AVR. While the embodiments described below may reference elements performed by or included in an AVR, it is to be understood that such elements may be performed by or included in any suitable media processing system (e.g., set-top box, BDS, etc.), as described above.

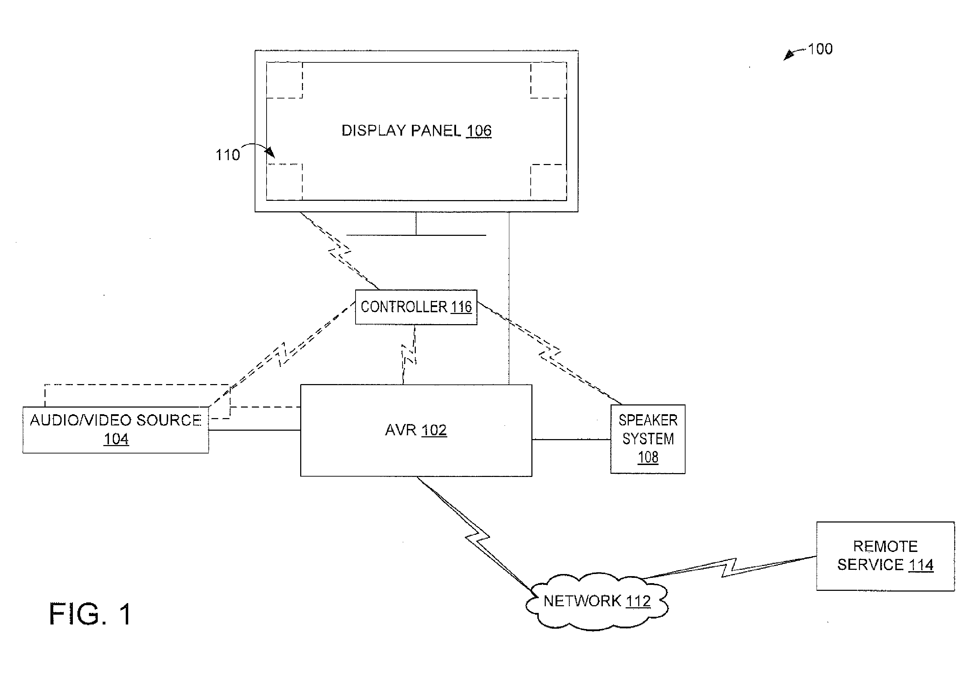

FIG. 1 shows an example of a home entertainment system 100 for providing audio and/or video content to a user. The home entertainment system 100 may include an AVR 102 for receiving content from one or more audio/video sources 104. As used in the present disclosure, the term audio/video describes audio and/or video unless otherwise indicated. The AVR 102 may provide audio/video data to multiple output devices, including display panel 106 for providing audio/video output and speaker system 108 for providing audio output. The display panel 106 may be any suitable display device, including but not limited to a television, a computer monitor, a display for a mobile device, a near-eye display, etc. For example, the display panel 106 may utilize any suitable display device technology, including a liquid crystal display (LCD), a cathode-ray tube (CRT) display, a plasma display panel (PDP), an organic light emitting diode (OLED) display, etc. The speaker system 108 may include any number of independent and/or interconnected audio output devices. For example, the speaker system 108 may include a plurality of speakers spaced from one another to provide a "surround sound" experience, in which sound may appear as though originating from any direction relative to a listener.

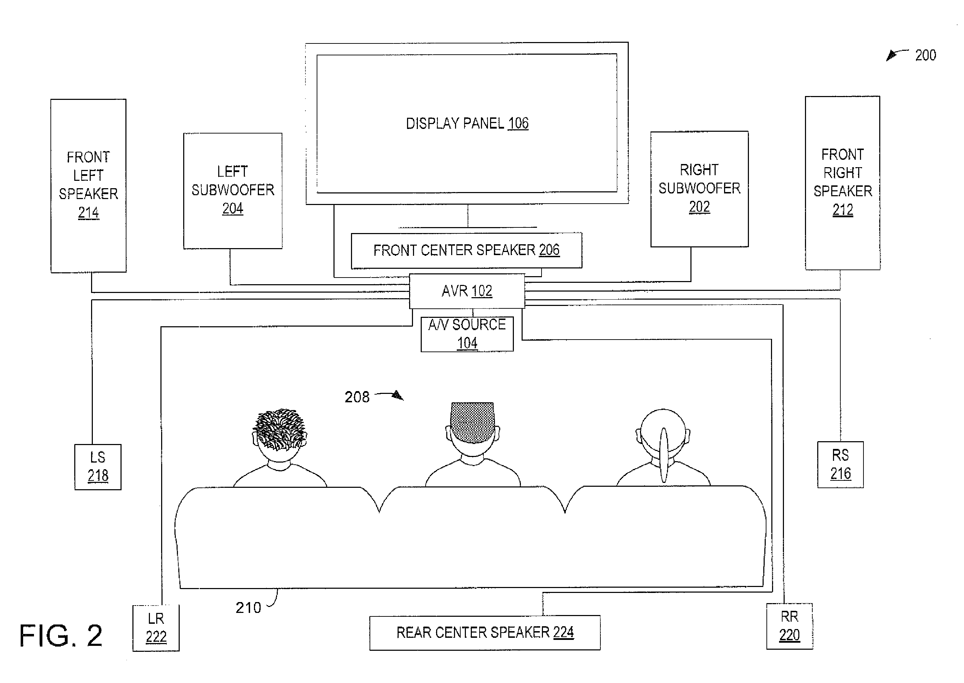

Turning briefly to FIG. 2, an example arrangement of speakers for a surround sound experience in a home entertainment environment 200 is illustrated. The plurality of speakers of a speaker system, such as speaker system 108 of FIG. 1, may include any combination and/or subset of the speakers illustrated in FIG. 2. In some embodiments, the speaker system may include additional or alternatively-positioned speakers from the speakers illustrated in FIG. 2. A 5.1 surround sound system may include a subwoofer, such as right subwoofer 202 or left subwoofer 204, and a front center speaker 206. A 5.2 surround sound system may include both the right subwoofer 202 and the left subwoofer 204. The front center speaker 206 may be positioned at approximately 0 degrees from a listening area 208 to provide sound that appears to originate directly in front of a listener. For example, listeners may typically view a display panel 106 and/or listen to audio from a particular piece of furniture in a room, such as a couch 210. In such examples, a listening area 208 may be defined as a center of the piece of furniture, such that a speaker positioned 0 degrees from the listening area may be positioned directly in front of the center of the piece of furniture.

A 5.1 surround sound system may also include a front right speaker 212 and a front left speaker 214 positioned directly beside the display panel 106 and/or within a range of 15 - 45 degrees from the listening area 208. In other words, the front right speaker 212 may be 15 - 45 degrees to the right of an axis extending from the listening area 208 to the display panel 106 and the front left speaker 214 may be 15 - 45 degrees to the left of the axis extending from the listening area 208 to the display panel 106. In some embodiments, the front right speaker 212 and the front left speaker 214 may be within a range of 22 - 30 degrees from the listening area 208. It is to be understood that the left and right speakers for each group of speakers in the speaker system may have the same absolute degree offset from the listening area or different absolute degree offsets from the listening area.

A right surround (RS) speaker 216 and a left surround (LS) speaker 218 may be included in the 5.1 surround sound system, positioned directly to the side of the listening area 208 and/or 80-120 degrees from the listening area 208 to provide sound that appears to originate from beside the listener and/or slightly behind the listener. Comparably to the front right speaker 212 and the front left speaker 214, the right and left surround speakers 216 and 218 may be positioned 80 - 120 degrees to the left and right, respectively, of the axis extending from the listening area 208 to the display panel 106. In some embodiments, the right surround speaker 216 and the left surround speaker 218 may be positioned 90 - 110 degrees from the listening area 208.

A 7.1 and/or a 7.2 surround sound system may include each of the speakers described above, in addition to a right rear surround (RR) speaker 220 and a left rear surround (LR) speaker 222, positioned 120 - 170 degrees from the listening area 208 in order to provide sound that appears to originate to the rear of a listener. Comparably to the front right speaker 212 and the front left speaker 214, the right and left rear surround speakers 220 and 222 may be positioned 120 - 170 degrees to the left and right of the axis extending from the listening area 208 to the display panel 106, respectively. In some embodiments, the left and right rear surround speakers may be positioned 135 - 150 degrees from the listening area 208. A 6.1 and/or 6.2 surround sound system may include each of the speakers of a 5.1 or 5.2 surround sound system described above, with the addition of a rear center speaker 224 to provide sound that appears to originate from directly behind the listener. Similarly, an 8.1 and/or an 8.2 surround sound system may include each of the speakers of a 7.1 or 7.2 surround sound system with the addition of the rear center speaker 224. As illustrated, the AVR 102 may be communicatively connected to each of the speakers described above in accordance with a particular surround sound system. It is to be understood that the arrangement of each of the speakers relative to the listening area may be configured to enable the speaker system to output sound that appears to originate from virtually any location relative to the listener.

Referring back to FIG. 1, audio/video content that originates from one or more audio/video sources 104 may be distributed to audio/video output devices via the AVR 102. The AVR 102 may store or otherwise include a plurality of predefined and/or configurable sound profiles and/or visual profiles that define adjustments to be made to audio/video data to provide a user experience that matches a particular type of content. In some embodiments, audio/video sources 104 may include a set-top box configured to provide content from a cable or satellite television provider to the home entertainment system 100. In additional or alternative embodiments, audio/video sources 104 may include any suitable audio/video source device, including DVD players, BLU-RAY players, VHS players, video game consoles, streaming media devices, digital media receivers, digital cameras, MP3 players, CD players, etc. The AVR 102 may receive raw image, video, and/or audio data from one or more of the audio/video sources, typically with little to no metadata included in the transmission. Accordingly, while a user may identify a channel from a channel logo appearing in one or more corners 110 of the screen, the AVR 102 may not receive an indication identifying or otherwise encoding the channel from the audio/video sources. In some embodiments, the AVR may be configured to receive a user selection of a particular sound and/or visual profile to adjust the audio/video data for content that is broadcast on the channel associated with the channel logo. In additional or alternative embodiments, the AVR may be configured to determine the channel logo, channel, programming on the channel, and/or type of content on the channel in order to automatically select a sound and/or visual profile that matches the type of content and adjust audio/video data in accordance with the sound/visual profile.

The AVR 102 may be communicatively connected to the audio/video sources 104 via any suitable connection or combination of connections, including physical and/or wireless connections. For example, the AVR 102 may be connected to the audio/video sources 104 via any suitable connector and associated communication protocol, such as HMDI, optical cabling, mobile high-definition link (MHL) connectors, RCA/composite/component connectors, coaxial cabling, USB, VGA connectors, DVI, SCART connectors, DISPLAYPORT connectors, Unified Display Interface (UDI), 3.5 mm connectors, etc.

The AVR 102 may be connected to a network 112 via wired and/or wireless communication, such as WI-FI, LTE, EVDO, GPRS, dLNA, Ethernet, BLUETOOTH, NFC, WiMAX, etc. The AVR 102 may communicate through the network 112 to one or more output devices, such as the display panel 106 and/or the speaker system 108, to one or more audio/video sources 104, and/or to one or more remote services, such as remote service 114. The remote service 114 may include one or more computing devices with a memory storage device storing instructions executable by a processor of the computing device to perform audio/video/image processing, access program and/or channel listings, authenticate transactions, and/or perform any other suitable process(es) to expand the capabilities of the AVR 102.

The entertainment system 100 may include a controller 116, such as a remote control device, for controlling one or more of the devices of the entertainment system. For example, the controller 116 may be a user input device to allow a user to interface with the audio/video sources 104, the AVR, the speaker system 108, and/or the display panel 106. The controller 116 may also provide control commands to other devices in the entertainment system not illustrated in FIG. 1. The controller 116 may communicate with the devices via any suitable protocol or combination of protocols, including but not limited to infrared signaling, BLUETOOTH, WI-FI direct, near-field communication, etc. In some embodiments, the controller 116 may communicate with the devices via the network 112.

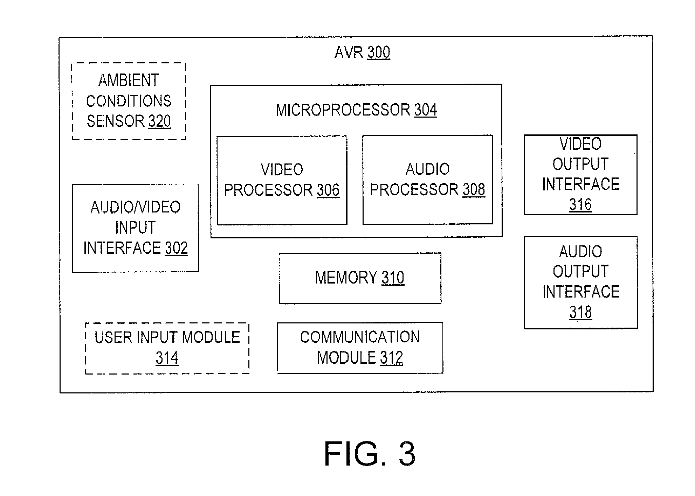

FIG. 3 shows a block diagram of an AVR 300, which may correspond to the AVR 102 of FIG. 1. The AVR 300 may receive audio/video content, from a set-top box for example, at an audio/video input interface 302. The audio/video input interface 302 may include any suitable ports, such as the connectors and associated communication protocols listed above, for communicating with an audio/video source. Accordingly, audio/video content, such as audio/video data for a televised program may be received at the audio/video input interface 302 and sent to a microprocessor 304 for processing. The microprocessor 304 may include any number of microprocessors; digital signal processors (DSPs); application-specific integrated processors (ASICs); general purpose microprocessors; field-programmable gate arrays (FPGAs); and/or digital signal controllers. For example, as illustrated in FIG. 3, the microprocessor 304 includes a video processor 306 and an audio processor 308 for processing and/or adjusting video and audio, respectively. In some embodiments, audio data may be received separately from video and sent directly to the audio processor. In additional or alternative embodiments, audio and video data may be received together (e.g., multiplexed), and split by the audio/video input interface 302 and/or the microprocessor 304 to be passed to the respective audio and video processors. In still other additional or alternative embodiments, audio and video data may be received together (e.g., multiplexed), and all data may be sent to each of the video processor 306 and the audio processor 308. In such embodiments, the video processor 306 and the audio processor 308 may snoop or otherwise examine the data to select only relevant data (e.g., video data for the video processor and audio data for the audio processor) for processing.

The microprocessor 304, video processor 306, and/or audio processor 308 may execute instructions stored in memory 310 to perform the respective functions. Memory 310 may store other data in addition to the instructions. For example, memory 310 may store incoming/received audio/video data and/or processed audio/video data in order to serve as a buffer for one or more processors and/or processes performed by the microprocessor 304. Memory 310 may also store information related to channels, channel logos, channel programming, types of content, and the like.

The video processor 306 may execute instructions stored in memory 310 to process incoming video data for display at a display panel. For example, video data may be upconverted or otherwise resized to match a resolution and/or aspect ratio of the display panel. One or more visual features of the video data may be adjusted at the video processor 306, including but not limited to brightness, contrast, saturation, gamma, hue, sharpness, frame rate, and/or any other suitable feature. In some embodiments, the video processor 306 may encode and/or decode incoming video data for presentation at a display panel.

As described above, an audio/video source such as a set-top box may transmit video data corresponding to programming without identifying the channel broadcasting that programming. Accordingly, image analysis may be performed by the video processor 306 in order to determine a logo and/or other information indicating a channel that is broadcasting programming including the incoming video data. Typically, logo information for a particular channel is shown periodically around one of the four corners of an image or frame of video data corresponding to programming broadcast on the channel. The video processor 306 may capture one or more frames of the incoming video data, examine one or more of the four corners of the captured frame(s), and determine whether a logo is present.

A captured frame may include four edges (e.g., a top, bottom, and two sides) of a displayable image corresponding to an uppermost line/row of displayable pixels, a lowermost line/row of displayable pixels, a leftmost line/column of displayable pixels, and a rightmost line/column of displayable pixels. A corner may be defined as a portion of pixels and/or pixel data radiating inward from an intersection of two of the four edges of the frame. For example, a corner may be defined as pixel data included in a segment of the displayable image formed by joining a point (e.g., a pixel) on a first edge of the displayable image with a point (e.g., a pixel) on a second, adjacent edge of the displayable image. The points may be joined with a substantially straight line (e.g., defining a triangle of pixel data within the displayable image), a curved line (e.g. defining a quarter-circle of pixel data within the displayable image), or a plurality of lines (e.g., defining a square, rectangle, and/or other polygon of pixel data within the displayable image). For example, as shown in FIG. 1, the corners 110 may include square-shaped segments of pixel data of a displayable image presented on the display 106 having two sides corresponding to two adjacent edges of the displayable image and two sides within the displayable image. The segments of pixel data defining the corners may be have any suitable size or dimension. For example, the video processor may execute a learning algorithm and/or maintain data regarding the success of finding logo image data within corners formed from segments having different shapes, sizes, dimensions, etc. In some embodiments, one or more corners may have different shapes and/or sizes from another corner. For example, logos that appear on the bottom of a displayable image may typically have an increased size or placement variation in comparison to logos that appear on the top of the displayable image. In such examples, the lower-right and lower-left corners may be defined as shapes that are a larger size than the shapes defining the upper-right and/or upper-left corners.

In some embodiments, the video processor 306 may send all or a portion of the captured frame(s) to an external/remote service, such as remote service 114 of FIG. 1, via a communication module 312. The communication module 312 may include one or more wired and/or wireless communication devices for communicating in accordance with any suitable protocol, including but not limited to those protocols listed above. The communication module 312 may additionally include one or more wired and/or wireless communication devices for interfacing with a user input control device, such as controller 116 of FIG. 1. In some embodiments, the devices for interfacing with a user input control device may be included in a user input module 314, separate from the communication module 312.

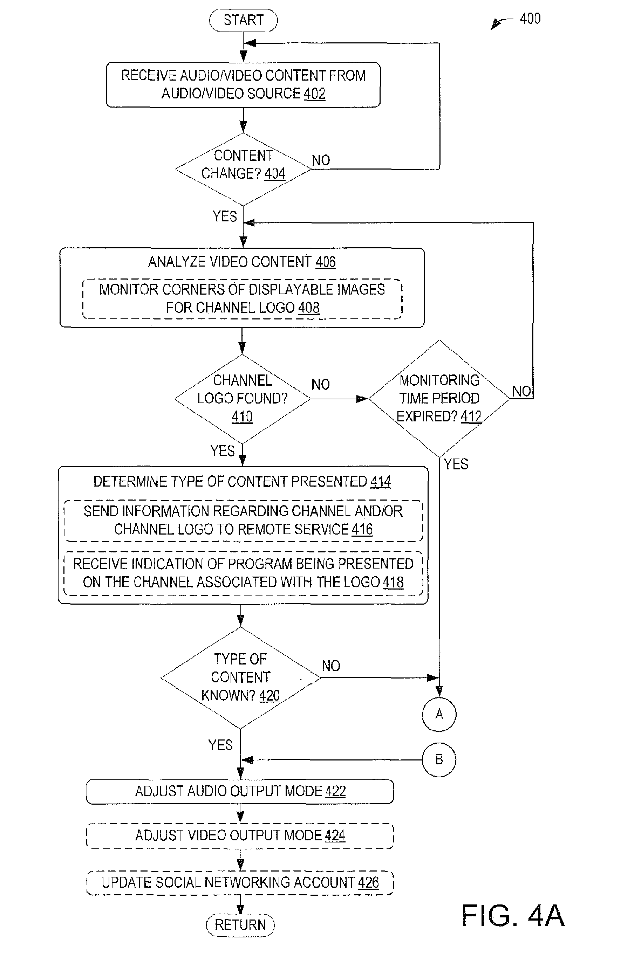

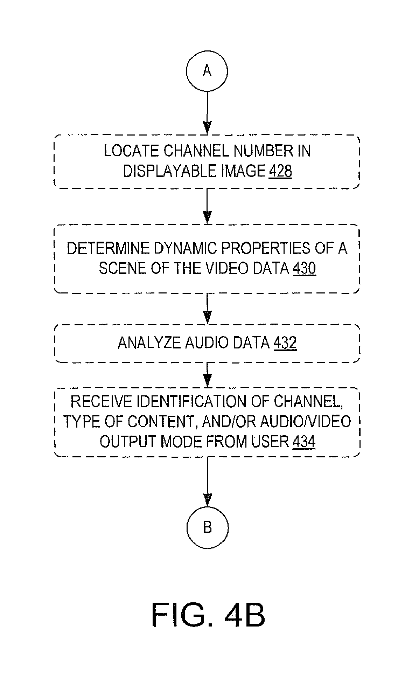

The video processor 306 and/or the remote service may determine if a logo is present by performing any suitable image analysis including object recognition on the capture frame(s). For example, the video processor 306 and/or the remote service may perform edge analysis, corner detection, gradient matching, and/or any other suitable object recognition technique(s) for determining the presence and features of a channel logo. The logo may include displayable features that are present in the same location during multiple scenes, thus multiple frames may be compared to determine elements that remain in the same location over a threshold period of time. Upon detection of the logo, the logo may be compared to known logos or otherwise analyzed to determine the channel with which the logo is associated. For example, the logo may be compared to a database or lookup table of known logos in order to match the logo with a channel designation. The database may be stored at the AVR 300, the remote service, and/or another computing device and accessed by the AVR 300 and/or the remote service to determine the channel associated with the logo. It is to be understood that other methods of determining the logo may be utilized, such as those described below with respect to FIGS. 4-6. For example, a channel number or other indication of the channel may be included in the video data for display on a display panel and identified via analysis of the captured frame(s). The channel number may be compared to a database or lookup table of channels associated with channel numbers in order to determine the channel broadcasting the video data to the audio/video source.

Upon determination of the channel, a channel programming listing may be consulted by the AVR and/or remote service in order to identify the content associated with the incoming video data. For example, the channel programming listing may be stored at the AVR, the remote service, and/or another computing device, and accessed to match the channel with a particular content item being broadcast on that channel. For live broadcast programming, the channel programming listing may be searched to determine content that is currently being broadcast on that channel. For recorded broadcast programming, the date and time of recording may be identified in order to determine the content that was broadcast at that date and time on that channel. The content may be categorized as a particular type of content, such as a movie, a sports event, music, and/or any other suitable type of content. In some embodiments, the channel programming listing may identify the type of content associated with the content item.

In additional or alternative embodiments, the type of content may be determined with the AVR and/or remote service by identifying additional information associated with the content. For example, the AVR and/or remote service may analyze the video data to determine features associated with different types of content and/or search alternative information sources to the channel programming listing for a content type associated with the identified content item. The video processor may perform additional processing on the video (e.g., selecting a picture mode and/or altering brightness, contrast, etc.) based on the identified content type, and send the video data to a video output interface 316 to transmit the video data to a display panel or other video output device. The video output interface may include one or more devices for interfacing with the display panel or other video output device, such as the connectors and associated protocols listed above with respect to FIG. 1. In some embodiments, the video data may be sent to the video output interface prior to completion of video processing in order to reduce output delay. For example, the video processor 306 may sample the video data and then pass the video data to the video output interface 316, so that the channel may be identified as the video data continues to be streamed to the display panel. Additional video processing may be performed on video data that arrives after determining the channel and content information.

Responsive to determining the content and/or type of content associated with the incoming video data, the audio processor 308 may adjust one or more features of the audio data and pass the audio data to an audio output interface 318. For example, if the content type is determined to be a movie, the audio processor 308 may enable surround sound, or otherwise identify a selected number of speakers for outputting the audio, and process audio in accordance with a cinema mode to apply equalization that best accommodates the sound included in movies. In examples having an identified content type of audio, the surround sound mode may be disabled or not enabled and equalization associated with the particular genre of music may be applied (e.g., jazz, pop, rock, etc.). The audio output interface may include one or more devices for interfacing with a speaker system (e.g., the speaker system 108 of FIG. 1) or other audio output device. For example, the audio output interface may include connectors and associated components that communicate via speaker wire, RCA cables, 3.5 mm plugs, and/or any other suitable connections for transmitting audio data. The audio output interface 318 may transmit audio data to the speakers as selected by the audio processor. The audio/video data may be adjusted based on ambient/environmental conditions detected by an ambient conditions sensor 320. For example, the ambient conditions sensor 320 may include a microphone, a visible light camera, a depth camera, a light sensor, and/or any other sensor for determining conditions of an environment of the AVR 300.

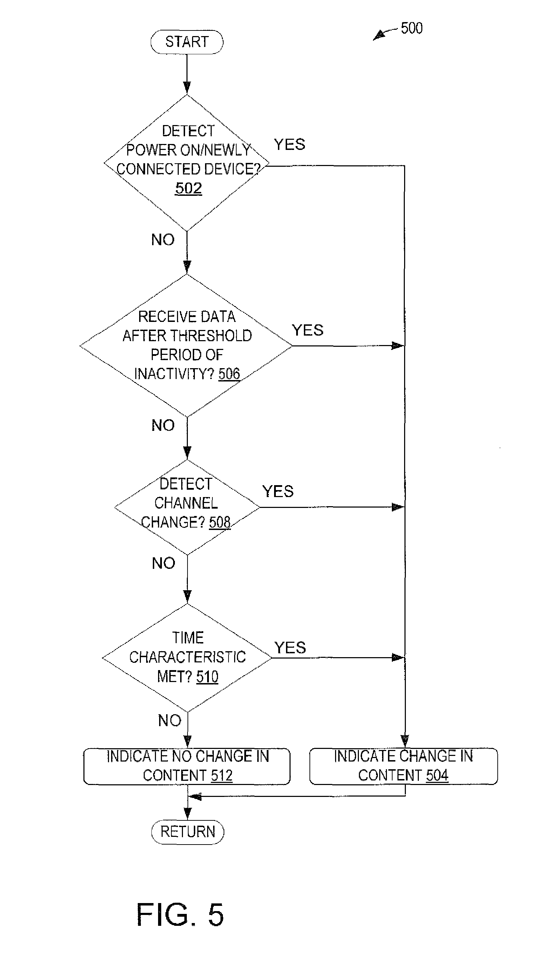

FIG. 4 is a flow chart of a method 400 for adjusting an audio output based on a determined type of content presented to a user. The method 400 may be performed by an AVR, such as AVR 102 of FIG. 1, in order to automatically (e.g., without user input, without user input/request to perform an adjustment, and/or without receiving a user request to change an audio output mode and/or sound profile) adjust one or more features of incoming audio/video data before passing the audio/video data to one or more output devices, such as the speakers of speaker system 108 and/or the display panel 106 of FIG. 1. The adjustment of the audio data is performed to match a type of content being presented to a user to provide a suitable listening/viewing experience while reducing user inconvenience associated with manual selection of a sound profile of the AVR. As indicated at 402, the method 400 includes receiving audio/video content from an audio/video source. In order to determine whether audio/video settings are to be changed, the method 400 includes determining whether content has changed at 404. For example, content may have changed from a last audio/video settings adjustment routine, or a content change may be determined for an initial audio/video settings adjustment. An example determination of a change in content is described in more detail below with respect to FIG. 5.

Continuing with FIG. 4, if a content change is not detected (e.g., if a change in content is not indicated during a performance of method 500 of FIG. 5), the method 400 returns to 402 to continue receiving audio/video content from an audio/video source. Responsive to determining that a content change is detected (e.g., if a change in content is indicated during a performance of method 500 of FIG. 5), the method 400 proceeds to analyze video content, as indicated at 406. The video content may be analyzed to determine features related to a channel and/or type of content being received from the audio/video source. For example, the frames of the video content may each comprise a displayable image for viewing at a display panel. As a channel logo often appears at a corner of a screen when viewed at the display panel, analyzing the video content may include monitoring one or more corners (e.g., one, two, three, and/or all four corners) of displayable images for the channel logo, as indicated at 408. The displayable images may correspond to selected frames captured by the AVR and/or each frame of video data received at the AVR.

At 410, the method 400 includes determining whether a channel logo is found (e.g., in the corners of the displayable image). The determination at 410 may be performed by the AVR or by a combination of the AVR and a remote service. In some embodiments, a video processor of the AVR may be configured to determine the presence of a channel logo by performing edge analysis, object recognition, and/or any other suitable video processing. For example, the video processor of the AVR may determine the presence of the channel logo by determining that one or more portions of the displayable image remain unchanged over the course of a threshold number of frames. In some embodiments, an average luminance, color, and/or other image attribute of a corner may be compared to an average luminance, color, and/or other image attribute of other portions of the image across a plurality of frames. The video processor of the AVR may recognize the presence of the channel logo and/or particular features of the logo that enable the logo to be matched to a channel. In additional or alternative embodiments, the AVR may send the entire displayable image and/or portions of the displayable image (e.g., one or more of the monitored corners of the displayable image) to the remote service to determine whether a channel logo is found. For example, the AVR may determine the presence of the logo and send a portion of the image including the logo (e.g., a particular corner of the image) to the remote service to verify that the channel logo is found. In such embodiments, the remote service may be configured to perform the edge analysis, object recognition, and/or other suitable video processing to determine the presence of a channel logo.

As channel logos may appear periodically, if a channel logo is not found, the method 400 may proceed to 412, in which the AVR determines whether a monitoring time period has expired. The time period may be a monitoring threshold that defines a period of time in which video content may be analyzed before determining that a channel logo is not locatable. If the time period has not expired at 412, the method 400 returns to 406 to continue analyzing video content. Conversely, if the time period has expired at 412, the method 400 proceeds to perform one or more optional steps to resolve the channel and/or type of content using information other than the channel logo. For example, the method 400 may proceed to step 428 of FIG. 4B, which includes locating a channel number in a displayable image. When changing a channel and/or powering on/awaking a display panel, AVR, and/or audio/video source, an indication of a current channel may be briefly displayed on the display panel. The indication of the current channel is often presented at a top portion of the display panel and/or in one of the corners of the display panel. Accordingly, the channel number may be located using one or more of the example video analysis approaches used to determine the channel logo described with regards to steps 406 and 408.

The method 400 may include determining dynamic properties of a scene of the video data in order to determine a channel and/or type of content, as indicated at 430. For example, by performing scene analysis of one or more frames of video data, a scorecard, field, arena, and/or other feature associated with a sports event may be detected. In response, the type of content may be determined to be a sports event, so that audio/video adjustments may be made in accordance with a sports mode of audio/video output. Audio data may be analyzed at 432 in a similar manner to the video data described above to determine characteristics related to a particular type of content. The method may use data signatures in the audio data to identify a type of content of the audio/video data, such as whether music is included in the audio data, whether conversations are included in the audio data, whether nature sounds are included in the data, etc. In some embodiments, a particular type of content may be determined responsive to detecting a threshold number of audio and/or video features matching the particular type of content. In additional or alternative embodiments, a particular type of content may be determined to be the particular type of content that is associated with the largest number of audio/video features of the audio/video data. Features associated with types of content may also be ranked and/or weighted, such that each type of content may be given a score indicating an amount that the audio/video data matches that type of content. For example, a scorecard may be more indicative of a sports event than a field, thus audio/video data that includes a scorecard in a displayable image may be given a higher score for a sporting event than audio/video data that includes a field or no sports-related features at all. In such examples, a particular type of content may be determined to be the particular type of content that is associated with the highest score for the audio/video data.

The method 400 may include receiving an identification of the channel, type of content, and/or audio/video output mode from the user, as indicated at 434. For example, the AVR may request information from the user to assist in determining the type of content and/or the suitable audio/video output mode when methods to determine such elements automatically are unsuccessful. In some embodiments, the determination of a type of content or related information may be given a confidence score, and user input may be requested to assist the AVR in determining the type of content if the confidence score is below a confidence threshold.

One or more of steps 428 through 434 of FIG. 4B may be performed in any order and at any point within the method 400 or as a separate method outside of method 400. For example, one or more of steps 428 through 434 may be performed if a channel logo is found in order to increase a confidence in a determination of a channel and/or content type or otherwise verify the determined channel and/or content type. In some embodiments, one or more of steps 428 through 434 may be omitted or repeated, and/or additional steps may be added to assist the AVR in determining a type of content.

Returning to step 410 of the method 400 (as shown in FIG. 4A), if a channel logo is found, the method includes determining, or attempting to determine, a type of content presented, as indicated at 414. The type of content may be determined at the AVR and/or with the assistance of a remote service. For example, the AVR may store or otherwise access a channel logo lookup table to match the identified channel logo to a particular channel. Upon determining the channel broadcasting the received audio/video content, the AVR may consult a stored channel programming listing or otherwise access such a listing to determine the content and associated type of content being broadcast on the channel corresponding to the identified channel logo. As described above, the content of live television may be determined by determining a current time and consulting the channel programming listing for the identified channel at the determined current time. Recorded programming may be determined by recognizing user input and/or audio/video features associated with navigating and/or selecting recorded programming from an audio/video source. A recording time may be determined by analyzing images from the video data of the recorded programming and/or examining metadata associated with the recorded programming. The content of recorded programming may be determined by consulting the channel programming listing for the identified channel at the determined recording time.

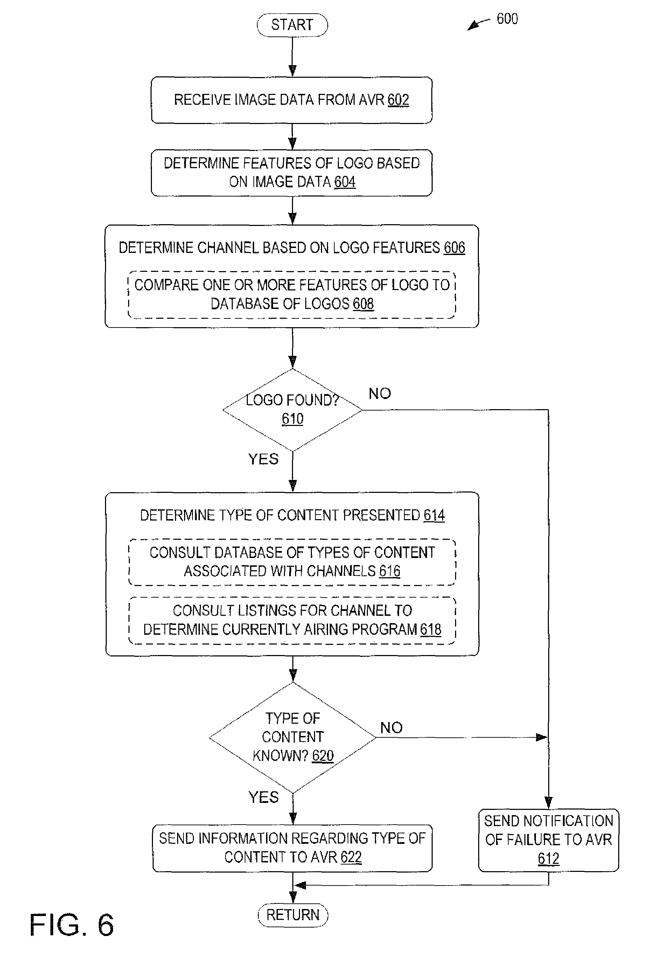

In embodiments utilizing a remote service to assist the AVR in determining the type of content presented, information regarding the channel and/or channel logo may be sent to the remote service, as indicated at 416. For example, if the channel and/or channel logo is determined by the AVR, the identification of the channel and/or the logo may be sent to the remote service for analysis. If the channel and/or channel logo is determined by a first remote service, the AVR may receive the identification of the channel and/or the logo from the first remote service and send this information to a second remote service for determining the type of content. If the determination of the channel and/or channel logo is determined by the same remote service as the determination of the type of content, the identification of the channel and/or channel logo may be maintained at the remote service at least until the type of content is determined. An example method of identifying a program and/or determining a type of content at a remote service is described below with reference to FIG. 6.

As indicated at 418, the method 400 may include receiving an indication of the program being presented on the channel associated with the logo (e.g., from the remote service). For example, the AVR may receive an identification of the type of content directly from the remote service. Additionally or alternatively, the AVR may receive information about a program being presented on the channel (e.g., a program name, description, rating, genre, etc.) and determine the type of content without further consultation with the remote service. For example, the AVR may consult a stored information bank, a different remote service, and/or a user to match a type of content with the identified program.

At 420, the method 400 includes determining whether the type of content is known. In some embodiments, the type of content may not be considered to be known and/or determined if a confidence in a type of content is below a threshold and/or if one or more methods of determining a type of content are unsuccessful. If a type of content is not determined, the method may continue and/or return to step 428 of FIG. 4B in order to pursue alternate approaches to determining a channel, channel logo, and/or type of content for an identified channel. Upon optionally performing steps 428 through 434 of FIG. 4B and/or if the type of content is determined to be known at 420, the method may proceed to 422 to adjust an audio output mode.

Adjusting an audio output mode may include adjusting the audio data in accordance with a sound profile defining settings for performing equalization, enabling/disabling a surround sound mode and/or one or more speakers of a surround sound system, adjusting tone controls, reducing noise, reducing ambient sounds, compressing/decompressing audio data, encoding/decoding audio data, applying one or more filters to the audio data, and/or performing any other audio processing to the received audio data in accordance with a particular audio output mode. Example audio output modes include but are not limited to cinema mode, sports mode, video game mode, music mode, etc. Each mode may be configured to provide one or more of the adjustments described above to produce sound suited to the type of content indicated by the mode. For example, as described above, a cinema mode may be selected for movie content, and include enabling a surround sound mode to provide audio to multiple speakers of a surround sound system and/or adjusting equalization in a specialized manner for movie content while the AVR is in the cinema mode. A music mode may provide different equalization presets and/or adjustments based on the type of music, including rock, pop, jazz, normal, classical, voice, etc. Accordingly, a rock music mode may be selected for heavy music, and the equalization may be adjusted in a specialized manner for rock music content while the AVR is in the rock music mode.

In addition to adjusting audio based on content, the audio may be adjusted based on the audio/video source and/or an environment (e.g., as detected by a camera and/or microphone of the AVR). For example, an output volume may be increased if ambient noise is above a threshold. In some embodiments, a sound profile may be adjusted based on a size, shape, and/or contents of a room in which the AVR is located. An audio output mode may be mapped to a type of content, audio/video source, and/or detected environment based on user selection. For example, a user may predefine assignments of audio output modes to different types of content. A user may also define one or more of the settings of a given sound profile. Upon selecting a particular audio output mode, a user may be given a choice to accept/reject the mode and/or adjust the settings associated with the mode. The adjusted audio data is the played, in real-time, with the video content to provide a desired listening and viewing experience to the user.

As indicated at 424, the method 400 may include adjusting a video output mode. The video output mode may be adjusted similarly to the audio output mode in accordance with a visual profile defining settings for resolution, brightness, contrast, hue, saturation, sharpness, gamma, aspect ratio, frame rate, encoding/decoding, compression/decompression, etc. Example video output modes may include but are not limited to game, graphics, vivid, original, standard, cinema, animation, sports, and/or custom. For example, a vivid mode may specify increased saturation and/or gamma in comparison with one or more other modes.

In addition to adjusting audio/video based on content, the audio/video may be adjusted based on the audio/video source and/or an environment (e.g., as detected by a camera and/or microphone of the AVR). For example, brightness may be increased if ambient light is above a threshold and/or output volume may be increased if ambient noise is above a threshold. In some embodiments, a sound profile may be adjusted based on a size, shape, and/or contents of a room in which the AVR is located. An audio/video output mode may be mapped to a type of content, audio/video source, and/or detected environment based on user selection. For example, a user may predefine assignments of audio/video output modes to different types of content. A user may also define one or more of the settings of a given sound/visual profile. Upon automatically selecting a particular audio/video output mode, the AVR may provide the user with a choice to accept/reject the mode and/or adjust the settings associated with the mode. In some embodiments, the AVR may automatically redefine the settings associated with a given mode responsive to the user adjusting the settings upon automatic selection of the mode a threshold number of times and/or a threshold number of consecutive times.

The method 400 may include updating a social networking account, as indicated at 426. For example, a user may associate the AVR with one or more social networking accounts. Upon determining a channel and/or program being presented to a user, the AVR may update a news feed or related element of one or more of the social networking accounts to indicate that the user is currently viewing the channel and/or program. The AVR may also automatically "like," "follow," "favorite," or otherwise indicate a preference for the channel and/or program being viewed by the user. The user may specify social networking settings, such as thresholds for performing the above described actions. For example, the AVR may be configured to perform some social media-related actions immediately after viewing a program, some social media-related actions after viewing a program for a viewing threshold period of time, and/or some social media-related actions after viewing a threshold number of episodes of a program. The AVR may store information related to a viewing history in order to determine programs of interest to the user.

FIG. 5 shows a flow chart of a method 500 of determining whether content has changed. As described above, the method 500 may be performed at step 404 of method 400 and/or as an ongoing process that triggers an audio adjustment upon detection of a change in content. As indicated at 502, method 500 includes determining whether a power on condition or a newly connected device is detected. For example, upon powering on and/or waking one or more devices of a home entertainment system from a sleep/inactive state (e.g., an AVR, an audio/video source, a display panel, a speaker system, etc.), a signal may be generated at the device(s) that is detected at an AVR. A signal may also be generated responsive to connecting one or more of the devices to the AVR. As new content is likely to be present under such conditions, the method 500 proceeds to 504, where a change in content is indicated, responsive to a power on state and/or newly connected device being detected by an AVR.

If a power on state and/or newly connected device is not detected by an AVR, the method continues to 506 to determine whether data is received after a threshold period of inactivity. For example, the home entertainment system may remain powered on without receiving content in the form of audio/video data. The period of inactivity may be any suitable threshold time period that indicates a potential change in content. For example, the period of inactivity may be a threshold time set high enough to allow for gaps in broadcast transmissions (e.g., brief signal losses or "dead air" conditions, power interrupts, etc.). In some embodiments, the threshold time may be set low enough to enable an audio/video source input switch (e.g., from a first audio/video source to a second audio/video source) to indicate that data is received after the threshold period of inactivity. If data is received after this period of inactivity, the method proceeds to 504 to indicate a change in content. Conversely, if data is not received after the period of inactivity (e.g., data is received before the period of inactivity expires and/or data is continually received), the method 500 proceeds to 508 to determine whether a channel change is detected.

A channel change may be detected based on a receipt of user input requesting a channel change and/or any suitable indication of a change of a channel. The channel change may correspond to a change of a broadcast television channel, a broadcast radio channel, a streaming audio/video channel, and/or any other suitable type of channel. If a channel change is detected, the change in content is indicated at 504. Otherwise, if a channel change is not detected, the method 500 proceeds to 510 to determine whether a time characteristic is met.

The time characteristic may correspond to a particular time of day, a threshold time since a last content change determination, and/or other time characteristics. For example, televised programming may change every hour or half hour of a day and the time characteristic may be met if the method 500 is performed during a different half hour or hour from a previous iteration of the method. In some embodiments, the particular time of day that a program will end and/or the duration of a program may be known. In such embodiments, the time characteristic may be met once the particular time of day is reached and/or the duration is exceeded, and the time characteristic may not be met before the particular time of day is reached and/or before the duration is exceeded. The time characteristic may additionally or alternatively be met upon determining that a threshold wait period has elapsed since the last iteration of the method 500 and/or other audio/video adjustment process. If the time characteristic is met, the method 500 proceeds to 504 to indicate a change in content. Responsive to not meeting the time characteristic, the method proceeds to 512 to indicate that there is no change in content. It is to be understood that the steps of method 500 may be performed in any suitable order, one or more steps may be omitted, and/or one or more additional steps may be included in the method.

As described above with respect to method 400 of FIGS. 4A and 4B, an AVR may communicate with a remote service at one or more stages of content type determination. FIG. 6 shows a flow chart of a method 600 for determining a type of content at a remote service. As indicated at 602, the method 600 includes receiving image data from an AVR. For example, the remote service may receive raw image data corresponding to one or more complete frames and/or one or more portions of the frame(s). At 604, the method 600 includes determining features of a channel logo based on the image data. For example, the remote service may perform one or more of the image analysis approaches described above, such as edge detection, object recognition, and the like, in order to determine visual information for the logo.

The method 600 includes determining the channel based on the logo features determined from the image data at 606. As indicated at 608, the channel may be determined by comparing one or more of the features of the logo to a database of logos. For example, the database of logos may include an indication of a channel associated with the logo and may be stored at the remote service and/or at a computing device in communication with the remote service. At 610, the remote service determines whether logo matching the logo features was found. If a logo was not found, the method proceeds to 612 to send a notification of failure to the AVR. For example, the notification of failure may specify the particular failure (e.g., that a logo matching the logo features was not found) in order to enable the AVR to take steps to resolve that particular failure. If the logo is found at 610, the method 600 includes determining the type of content presented, as indicated at 614. The type of content may be determined in any suitable manner, including those described above with respect to method 400 of FIGS. 4A and 4B. For example, at 616 the remote service may consult a lookup table or other database of types of content associated with channels to match the channel corresponding to the identified logo with a type of content. As indicated at 618, the remote service may additionally or alternatively consult channel programming listings for the channel corresponding to the identified logo to determine a currently airing program. If the remote service is not informed as to the current time and/or whether the audio/video data is from recorded or live programming, the remote service may determine a type of content based on a type of content most frequently provided on the channel. For example, if 75% of the content provided by a particular channel includes movies, the remote service may associate that channel with movie content.

At 620, the remote service may determine whether a type of content associated with the audio/video data associated with the image data received by the AVR is known. For example, the type of content may be determined to be known if the remote service successfully determined the type of content at 614, 616, or 618 and/or determined the type of content with a confidence above a confidence threshold. If the type of content is not determined to be known at 620, the method 600 proceeds to 612 to send a notification of failure to the AVR. As described above, the notification of failure may be particular to the type of failure (e.g., a failure to determine a type of content) to assist the AVR in resolving the failure. If the type of content is determined to be known at 620, the method 600 proceeds to 622 to send information regarding type of content to the AVR. For example, the information regarding the type of content may include the identified type of content and/or any confidence values associated with the determination of that type of content. In some embodiments, the remote service may send information regarding the logo, channel, and/or programming the AVR along with the information regarding the type of content.

By automatically determining the type of audio/video content being presented to a user based on features of the audio/video data, the audio/video data may be adjusted to suit the type of content via an AVR, even when details regarding the content are not readily available to the AVR. The disclosed systems and methods recognize that information identifying the channel associated with the content (e.g., logo, channel number) are typically displayed in a particular position of video from the content, and use this information to determine the type of content being presented. The described adjustments to the audio/video data thereby provide an enhanced user experience that allows for automatic adjustments of audio/video output modes to match the type of content being presented to the user, even as the content changes.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices, such as the audio/video source device, AVR (or other suitable media processing system), and/or remote service described in FIG. 1. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and subcombinations of the various systems and configurations, and other features, functions, and/or properties disclosed. The following claims particularly point out subject matter from the above disclosure that is regarded as novel and non-obvious.

As used in this application, an element or step recited in the singular and proceeded with the word "a" or "an" should be understood as not excluding plural of said elements or steps, unless such exclusion is stated. Furthermore, references to "one embodiment" or "one example" of the present invention are not intended to be interpreted as excluding the existence of additional embodiments that also incorporate the recited features. Moreover, unless explicitly stated to the contrary, embodiments "comprising," "including," or "having" an element or a plurality of elements having a particular property may include additional such elements not having that property. The terms "including" and "in which" are used as the plain-language equivalents of the respective terms "comprising" and "wherein." Moreover, the terms "first," "second," and "third," etc. are used merely as labels, and are not intended to impose numerical requirements or a particular positional order on their objects.

## Claims

1. A method of adjusting audio/video data, the method comprising:
receiving audio content and video content;
analyzing the video content to identify image data indicating a channel generating the audio content and the video content;
adjusting audio data of the audio content responsive to a type of content on the channel.

2. The method of claim 1, further comprising:
sending the identified image data to a remote service (114); and
receiving information regarding the type of content on the channel defined by the image data from the remote service.

3. The method of claim 1 or 2, wherein the image data includes an image of a channel logo, and wherein the audio/video data is adjusted without input from a user, and wherein the video content is played together in real-time with the adjusted audio data.

4. The method of any of claims 1 to 3, wherein adjusting audio data includes selecting one of a plurality of audio output modes, each of the plurality of audio output modes including an audio profile defining one or more audio settings for altering a feature of the audio data.

5. The method of claim 4, wherein the audio content and video content is received from an audio/video source device, the video content including one or more frames of a video, each of the one or more frames including a displayable image, and wherein analyzing video content comprises capturing selected frames of the one or more frames and monitoring one or more corners (110) of the displayable image for each of the selected frames for a channel logo.

6. The method of claim 5, further comprising monitoring the one or more corners (110) of the displayable image for each of the selected frames until the channel logo is detected or a monitoring time period expires.

7. The method of any of claims 1 to 6, wherein analyzing video content includes determining dynamic properties of a scene of the video content.

8. The method of any of claims 1 to 7, further comprising analyzing the audio content to determine or verify the type of content.

9. The method of any of claims 1 to 8, further comprising adjusting one or more features of video data output to a display panel responsive to the type of content.

10. The method of any of claims 1 to 9, further comprising outputting the audio data to one or more speakers of a speaker system.

11. A media processing system comprising:
an audio/video interface (302) communicatively connected to an audio/video source for receiving audio content and video content;
a panel interface communicatively connected to a display panel for outputting video content to the display panel;
an audio output device interface (318) communicatively connected to an audio output device for outputting audio to the audio output device; and
a microprocessor (304) configured to execute instructions stored on a storage device to:
analyze the video content to determine logo image data;
determine a type of video content based on the logo image data; and
adjust audio output responsive to the type of video content.

12. The media processing system of claim 11, further comprising a communication interface for communicating with a remote service.

13. The media processing system of claim 11 or 12, wherein the microprocessor (304) comprises video processor and audio processor, the video processor being configured to monitor one or more frames of the video content to detect a presence of a channel logo defined by the logo image data

14. The media processing system of any of claims 11 to 13, further comprising an ambient conditions sensor (320), the microprocessor (304) further configured to execute instructions stored on a storage device to adjust one or more of audio and video output responsive to sensed ambient conditions.

15. The media processing system of claim 14, wherein adjusting one or more of audio and video output includes adjusting video output responsive to ambient light sensed by the ambient conditions sensor.

16. A method of adjusting audio from an audio/video source device at an audio/video receiver (300), the method comprising:
detecting a change in audio/video content received at the audio/video receiver (300);
analyzing video content of the audio/video content for logo image data defining a channel logo;
responsive to detecting the logo image data, receiving an indication of a type of content for the audio/video content;
responsive to the indication of the type of content, adjusting an audio output mode and outputting the audio/video content in accordance with the audio output mode.

17. The method of claim 16, further comprising determining a channel corresponding to the channel logo by comparing one or more features of the channel logo to a database of channel logos.

18. The method of claim 17, wherein determining the type of content includes consulting a channel programming listing for the channel.

19. The method of claim 17, wherein determining the type of content includes consulting a database of types of content associated with channels.

20. The method of claim 17, further comprising updating a social networking account for a user associated with the audio/video receiver based on the channel.
